# EUROPEAN PATENT SPECIFICATION

(11) **EP 2 043 309 B1**
(45) Date of publication and mention of the grant of the patent: **17.04.2013**
(21) Application number: 08014897.6
(22) Date of filing: 22.08.2008
(51) Int. Cl.: H04L 12/911

(54) **Probationary admission control in relay networks**
Probeweise Zulassungssteuerung in Relais-Netzwerken
Contrôle d'admission à l'essai dans des réseaux de relais

(30) Priority: 25.09.2007 US 861079
(43) Date of publication of application: 01.04.2009
(73) Proprietor: Avaya, Inc., Basking Ridge, NJ 07920 (US)
(72) Inventor: Karacali-Akyamac, Bengi, 08807 New Jersey (US); Karol, Mark John, 07704 New Jersey (US); Krishnan, Parameshwaran, Basking Ridge, New Jersey 07920 (US); Meloche, Jean, 07940 New Jersey (US)
(74) Representative: Tergau & Walkenhorst

(56) References cited:
- WO-A1-03/094546
- US-A1- 2001 010 688
- US-A1- 2006 028 991

## Description

### Field of the Invention

The present invention relates to telecommunications in general, and, more particularly, to the administration of packet networks.

### Background of the Invention

The advantages of using relay nodes in packets networks to provide quality-of-service assurance in networks that do not provide quality-of-service guarantees are becoming clear, as is taught in U.S. Patent Application 11/201,892, filed 08/11/2005, entitled "Quality-of-Service Assurance for IP Telephony" (Attorney Docket 630-128us). In order to provide an adequate QoS, document WO 03/094546 teaches a dynamic channel allocation method wherein each node monitors the link performance on a first channel and, if the link performance is below a QoS threshold, it switches the communications from the first channel to a second one having a QoS higher than the threshold. However, the prior art is not always sufficient, and, therefore, the need exists for inventions that help ensure satisfactory quality-of-service in networks that do not provide quality-of-service guarantees.

### Summary of the Invention

The present invention is a technique that seeks to direct and re-direct streams of packets through a packet network without adversely affecting the quality of service of existing streams. In accordance with the illustrative embodiment of the present invention, streams of packets that are directed and re-directed through a packet network are initially put on probation. During the probation period, a quality-of-service measure for the stream is compared with a threshold whose value is initially high and decreases with time. This has the advantageous effect of noticing problems quickly so that they can be remediated quickly. Embodiments of the present invention are useful in both relay and non-relay networks.

The illustrative embodiment comprises (1) at moment *t₁*, directing a stream of packets from a source node to a destination node on a first path; (2) at moment *t₂*, calculating that a quality-of-service score *R(t)* for the stream of packets is below a quality-of-service threshold *T(t)* for the stream of packets; and (3) at moment *t₃*, re-directing the stream of packets from the source node to the destination node on a second path because the quality-of-service score *R(t)* for the stream of packets on the first path is below the quality-of-service threshold *T(t)*; wherein the quality-of-service threshold *T(t)* varies and is greater at moment *t₂* than at moment *t₂*+Δ; wherein moment *t₁* is before moment *t₂*; wherein moment *t₂* is before moment *t₃*; and wherein Δ is a positive real number greater than zero.

### Brief Description of the Drawings

Figure 1 depicts a schematic diagram of a packet network in accordance with the illustrative embodiment of the present invention.
Figure 2 depicts a flowchart of the operation of the illustrative embodiment of the present invention.
Figure 3 depicts a graph of the threshold schedule in accordance with the illustrative embodiment of the present invention.
Figure 4 depicts a graph of the quality-of-service score *R(t)* for the stream of packets with respect to the threshold schedule in accordance with the illustrative embodiment of the present invention.

### Detailed Description

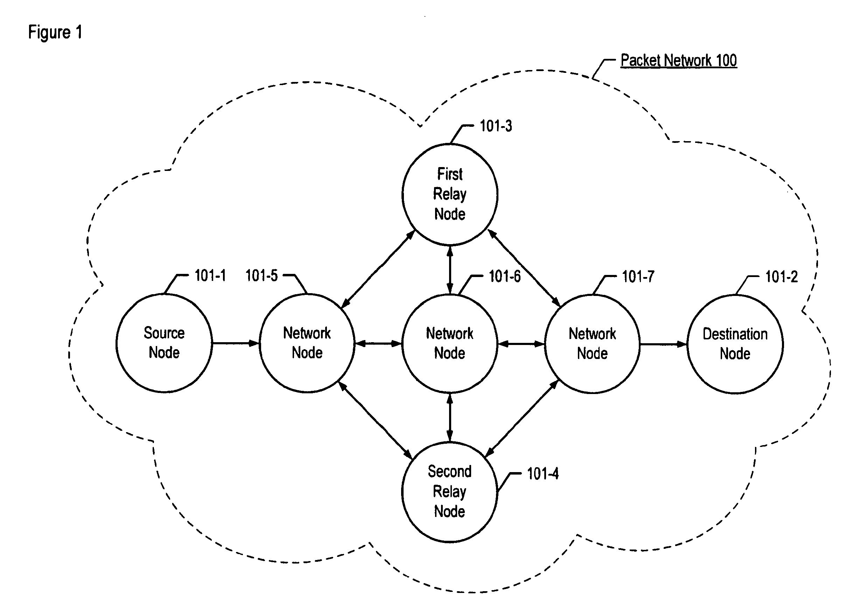

**Figure 1** depicts a schematic diagram of a packet network in accordance with the illustrative embodiment of the present invention. In packet network 100, the quality of service of a stream of packets is attained by re-directing the stream off of one or more relay nodes between its source and destination. U.S. Patent Application 11/201,892, filed 08/11/2005, entitled "Quality-of-Service Assurance for IP Telephony" (Attorney Docket 630-128us) is a tutorial on the use of relays nodes to attain quality of service goals for streams of packets.

Packet network 100 comprises: source node 101-1, destination node 101-2, first relay node 101-3, second relay node 101-4, and network nodes 101-5 through 101-7, interconnected as shown. Although the illustrative embodiment comprises seven nodes, it will be clear to those skilled in the art, after reading this specification, how to make and use alternative embodiments of the present invention that comprise any number of nodes.

Packet network 100 is capable of conveying a stream of packets that represents:
i. audio, or
ii. video, or
iii. data, or
iv. any combination of i, ii, and iii
between any two nodes. It is well known to those skilled in the art how to encode any combination of audio, video, and data into a stream of packets and how to decode the stream of packets to recover the original content.

In accordance with the illustrative embodiment, packet network 100 supports both connection-oriented sessions and connectionless (*i*.*e*., datagram) service between each pair of nodes.

Source node 101-1 comprises hardware and software and is capable of performing the functionality described below and in the accompanying drawings. Destination node 101-2 comprises hardware and software and is well known to those skilled in the art. First relay node 101-3 and second relay node 101-4 each comprise hardware and software and are well known to those skilled in the art. In accordance with the present invention, the salient characteristic of first relay node 101-3 and second relay node 101-4 is that each is capable of relaying or re-directing a packet addressed to it to another node. Switching nodes 101-5 through 101-6 each comprise hardware and software and are well known to those skilled in the art.

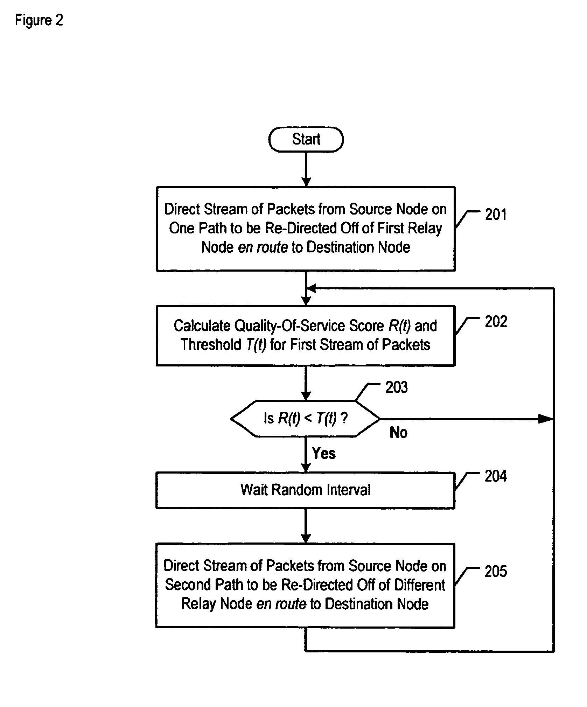

**Figure 2** depicts a flowchart of the operation of the illustrative embodiment of the present invention. Prior to the execution of task 201, there are one or more streams of packets flowing through packet network 100, and each of the streams originates at one of the nodes and terminates at another of the nodes. At task 201, source node 101-1 directs a stream of packets to first relay node 101-3 on a first path with instructions that the stream is to be re-directed off of first relay node 101-3 *en route* to destination node 101-2. Task 201 occurs at moment *t₁* and resets a probationary timer that is associated only with the stream of packets. It will be clear to those skilled in the art, after reading this specification, how to make embodiments of the present invention that perform task 201.

At task 202, source node 101-1 begins the function of (1) ensuring that the quality of service of the stream of packets as re-directed off of the first relay node remains acceptable, and (2) ensuring that the stream of packets as re-directed off of the first relay node does not destroy the quality of service of other streams of packets flowing in packet network 100. To do this, source node 101-1 calculates two quantities: (1) a quality-of-service score *R(t)* for the stream of packets, and (2) a quality-of-service threshold *T(t)* for the stream of packets. Because each of these quantities changes with time, both quantities are calculated to be effective for the same moment *t* to ensure that they can be compared on an apples-to-apples basis.

The calculation of the quality-of-service score *R(t)* for the stream of packets can be accomplished in any of many well-known ways. In accordance with the illustrative embodiment, the quality-of-service score *R(t)* for the stream of packets is given a score between 0 to 100 and is based on ITU-T Recommendation G.107, "The E Model: A computational model for use in transmission planning," 2003. It will be clear to those skilled in the art, however, how to make and use alternative embodiments of the present invention in which the quality-of-service score *R(t)* is calculated in a different way.

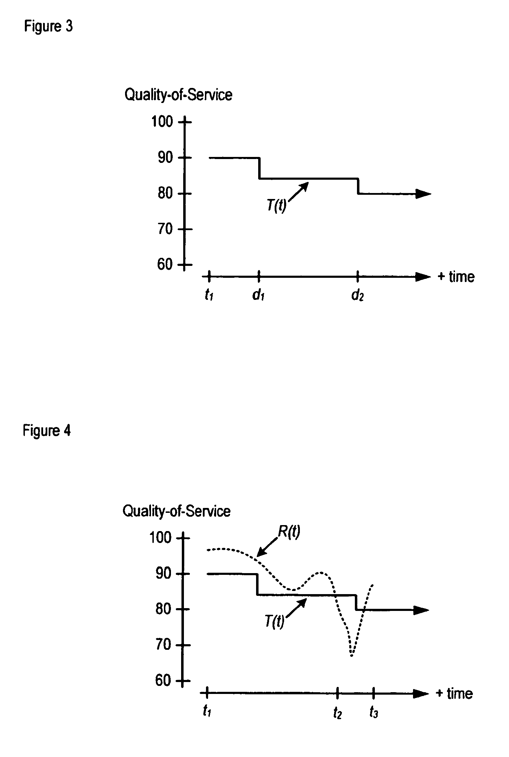

In accordance with the illustrative embodiment, the quality-of-service threshold *T(t)* for the stream of packets decreases with time. In accordance with the illustrative embodiment, the threshold *T(t)* decreases in discrete steps at moments *d₁* and *d₂*. An example threshold schedule is depicted in Table 1 and Figure 3.

**Table 1 - Example Threshold Schedule**

| ***Probation Status*** | ***t*** | ***T*** |
|---|---|---|
| On Probation - Probationary Call | *t* < *d₁* | 90 |
| | *d₁* ≤ *t* ≤ *d₂* | 85 |
| Off Probation - Established Call | *t* > *d₂* | 80 |

The threshold schedule is a straightforward mechanism for initially putting the stream of packets on "probation" with respect to the other established streams of packets. In the event that the presence of the stream as relayed through relay node 101-3 is causing congestion and adversely affecting the quality of service of the other established streams of packets, the threshold schedule has the advantageous benefit of forcing the re-directing of the stream of packets before the quality of service of the other established streams of packets is irreparably affected. Although in accordance with the illustrative embodiment the threshold schedule comprises three discrete steps, it will be clear to those skilled in the art, after reading this disclosure, how to make and use alternative embodiments of the present invention in which the threshold decreases continuously or discretely in any number of steps.

Ideally, the probation interval is long enough that source node 101-1 can ascertain whether the quality of service of the other established streams of packets are adversely affected by the stream of packets and yet is short enough that source node 101-1 can re-direct the stream of packets before the quality of service of the other established streams of packets is irreparably affected.

At task 203, source node 101-1 compares the quality-of-service score *R(t)* for the stream of packets, calculated in task 202, with the quality-of-service threshold *T(t)* for the stream of packet, as also calculated in task 202. When the quality-of-service score *R(t)* is greater than or equal to the quality-of-service threshold *T(t)*, then source node 101-1 infers that the quality of service for the stream of packets is good and control returns to task 202. In contrast, when the quality-of-service score *R(t)* is less than the quality-of-service threshold *T(t),* then source node 101-1 infers that the quality of service for the stream of packets is not good. In other words, that the stream of packets needs to be re-directed. In this case, control passes to task 204. A time-lapsed diagram comparing *R(t)* and *T(t)* is depicted in Figure 4, which shows *R(t)* falling below *T(t)* at moment *t₂*.
At task 204, source node 101-1 waits a random interval of time before proceeding to task 205. This interval is depicted as between moment *t₂* and moment *t₃* in Figure 4. The purpose of task 204 is to remediate the situation in which congestion in packet network 100 simultaneously causes many streams of packets to fall through their respective quality-of-service thresholds and many nodes try to simultaneously seek alternative paths for those streams. Put another way, the random interval is analogous to having soldiers break cadence when crossing a bridge. It will be clear to those skilled in the art how to make and use embodiments of the present invention that perform task 204.

At task 205, at moment *t₃* as depicted in Figure 4, source node 101-1 seeks a second alternative path for the stream of packets and, as a consequence, re-directs the stream of packets to be re-directed off of second relay node 101-4 *en route* to destination node 101-2. As part of task 205, the probationary timer that is associated only with the stream of packets is reset and the probationary period begins again. It will be clear to those skilled in the art how to make and use embodiments of the present invention that perform task 205. From task 205, control returns to task 202.

It is to be understood that the disclosure teaches just one example of the illustrative embodiment and that many variations of the invention can easily be devised by those skilled in the art after reading this disclosure and that the scope of the present invention is to be determined by the following claims.

## Claims

1. A method comprising:
1. at moment *t₁* (201), directing a stream of packets from a source node (101-1) to a destination node (101-2) on a first path and setting a probationary timer associated with the stream of packets;
2. at moment *t₂* (202), calculating, via the source node (101-1), a quality-of-service score *R(t)* for the stream of packets and a quality-of-service threshold *T(t)* for the stream of packets, wherein the quality-of-service threshold *T(t)* decreases with time; and
3. at moment *t₃* (203, 205), re-directing, via the source node (101-1), the stream of packets from the source node (101-1) to the destination node (101-2) on a second path and returning to the calculating step when the quality-of-service score *R(t)* for the stream of packets on the first path is below the quality-of-service threshold *T(t)*,
wherein moment *t₁* is before moment *t₂*,
wherein moment *t₂* is before moment *t₃*.

2. The method of claim 1 wherein the stream of packets is transmitted on the first path by forwarding the stream of packets to a first relay node (101-3) that redirects the stream of packets to the destination node (101-2), and
the stream of packets is transmitted on the second path by forwarding the stream of packets to a second relay node (101-4) that redirects the stream of packets to the destination node (101-2).

3. The method of claim 1 wherein an interval between moment *t₂* and moment *t₃* is randomly chosen from a range of back-off intervals.

4. The method of claim 1 wherein the quality-of-service threshold *T(t)* is greater at moment *t₁* than at moment *t₂*.

## Patentansprüche

1. Verfahren, das Folgendes umfasst:
1. im Moment *t₁* (201) Leiten eines Stroms von Paketen von einem Ursprungsknoten (101-1) an einen Zielknoten (101-2) auf einem ersten Weg und Einstellen eines mit dem Strom von Paketen assoziierten Probezeitnehmers;
2. im Moment *t₂* (202) Kalkulieren, über den Ursprungsknoten (101-1), einer Dienstqualitätsbewertung *R(t)* für den Strom von Paketen und einer Dienstqualitätsschwelle *T(t)* für den Strom von Paketen, wobei die Dienstqualitätsschwelle *T(t)* mit der Zeit abnimmt;
und
3. im Moment *t₃* (203, 205) Umleiten, über den Ursprungsknoten (101-1), des Stroms von Paketen vom Ursprungsknoten (101-1) an den Zielknoten (101-2) auf einem zweiten Weg und Zurückkehren zum Schritt des Kalkulierens, wenn die Dienstqualitätsbewertung *R(t)* für den Strom von Paketen auf dem ersten Weg unter der Dienstqualitätsschwelle *T(t)* ist,
wobei der Moment *t₁* vor dem Moment *t₂* ist,
wobei der Moment *t₂* vor dem Moment *t₃* ist.

2. Verfahren nach Anspruch 1, wobei der Strom von Paketen auf dem ersten Weg durch Weitersenden des Stroms von Paketen an einen ersten Relaisknoten (101-3), der den Strom von Paketen an den Zielknoten (101-2) umleitet, übertragen wird und
der Strom von Paketen auf dem zweiten Weg durch Weitersenden des Stroms von Paketen an einen zweiten Relaisknoten (101-4), der den Strom von Paketen an den Zielknoten (101-2) umleitet, übertragen wird.

3. Verfahren nach Anspruch 1, wobei ein Intervall zwischen dem Moment *t₂* und dem Moment *t₃* zufällig aus einer Reihe von Back-Off-Intervallen ausgewählt wird.

4. Verfahren nach Anspruch 1, wobei die Dienstqualitätsschwelle *T(t)* im Moment *t₁* größer als im Moment *t₂* ist.

## Revendications

1. Procédé comprenant les étapes consistant à :
1. à un moment *t₁* (201), diriger un flux de paquets d'un noeud source (101-1) à un noeud destinataire (101-2) sur un premier trajet et établir un temporisateur d'essai associé au flux de paquets ;
2. à un moment *t₂* (202), calculer, via le noeud source (101-1) un résultat de qualité de service *R(t)* pour le flux de paquets et un seuil de qualité de service *T(t)* pour le flux de paquets, dans lequel le seuil de qualité de service *T(t)* diminue dans le temps ; et
3. à un moment *t₃* (203, 205), rediriger, via le noeud source (101-1), le flux de paquets du noeud source (101-1) au noeud destinataire (101-2) sur un second trajet et revenir à l'étape de calcul lorsque le résultat de qualité de service *R(t)* pour le flux de paquets sur le premier trajet est inférieur au seuil de qualité de service *T(t)*,
dans lequel le moment *t₁* est avant le moment *t₂*,
dans lequel le moment *t₂* est avant le moment *t₃*.

2. Procédé selon la revendication 1, dans lequel le flux de paquets est transmis sur le premier trajet en acheminant le flux de paquets vers un premier noeud relais (101-3) qui redirige le flux de paquets vers le noeud destinataire (101-2), et
le flux de paquets est transmis sur le second trajet en acheminant le flux de paquets vers un second noeud relais (101-4) qui redirige le flux de paquets vers le noeud destinataire (101-2).

3. Procédé selon la revendication 1, dans lequel un intervalle entre le moment *t₂* et le moment *t₃* est choisi aléatoirement parmi une plage d'intervalles de réduction de puissance.

4. Procédé selon la revendication 1, dans lequel le seuil de qualité de service *T(t)* est supérieur au moment *t₁* par rapport au moment *t₂*.
